# EUROPÄISCHE PATENTSCHRIFT

(11) **EP 2 428 699 B1**
(45) Veröffentlichungstag und Bekanntmachung des Hinweises auf die Patenterteilung: **17.12.2014**
(21) Anmeldenummer: 10011972.6
(22) Anmeldetag: 30.09.2010
(51) Int. Cl.: F16H 3/093

(54) **Doppelkupplungsgetriebe mit ausgelagertem Rückwärtsgang**
Double-clutch transmission with displaced reverse gear
Boîte de vitesses à double embrayage dotée d'une marche arrière déplacée

(30) Priorität: 10.09.2010 DE 102010037451
(43) Veröffentlichungstag der Anmeldung: 14.03.2012
(73) Patentinhaber: Dr. Ing. h.c. F. Porsche AG, 70435 Stuttgart (DE)
(72) Erfinder: Avery, Gary, 71636 Ludwigsburg (DE)

(56) Entgegenhaltungen:
- EP-A1- 1 653 106
- EP-A1- 2 068 041
- DE-A1-102009 039 511
- FR-A1- 2 893 689
- JP-A- 11 051 125
- US-A1- 2010 186 549

## Beschreibung

Die Erfindung betrifft ein Getriebe, das mehrere Vorwärtsgänge und einen Rückwärtsgang aufweist, mit mindestens einer Eingangswelle mit Antriebszahnrädern, zwei Vorgelegewellen, jeweils mit als Losräder ausgeführten Abtriebszahnrädern und einem Antriebszahnrad, wobei die Antriebszahnräder der mindestens einen Eingangswelle mit den Abtriebszahnrädern der Vorgelegewellen kämmen und die Antriebszahnräder der Vorgelegewellen mit mindestens einem Abtriebszahnrad einer Ausgangswelle kämmen, sowie mit Einrichtungen zum Schalten der Losräder.

Derartig ausgestaltete Getriebe sind aus der Praxis bekannt, beispielsweise als automatisierte Schaltgetriebe oder Handschaltgetriebe. Bei dem automatisierten Getriebe handelt es sich beispielsweise um ein Doppelkupplungsgetriebe. Bei diesem sind zur Einstellung von mehreren Vorwärtsgängen und einem Rückwärtsgang zwei Vorgelegewellen vorgesehen. Üblicherweise ist zur Realisierung des Rückwärtsgangs ein Loszahnrad vorgesehen, das extra für den Rückwärtsgang an einer geeigneten Stelle positioniert ist. Demnach ist für den Rückwärtsgang ein eigener Radsatz, meistens mit einem Zwischenrad, vorgesehen, wobei dieser Radsatz für keine weiteren Gänge verwendet wird. Bei einem Doppelkupplungsgetriebe wird übllcherwelse der Gangwechsel durch ein Umschalten von einer Kupplung auf die andere Kupplung realisiert. Demnach erfolgt der Gangwechsel von zwei bereits eingelegten Gängen durch den Kupplungswechsel mit verkürzten Schaltzelten, Beim Einlegen eines Rückwärtsganges, beispielsweise beim Rangieren eines Fahrzeugs, erfolgt der Gangwechsel für die Rangiermanöver zwischen dem ersten und dem Rückwärtsgang.

In der gattungsgemäßen DE 10 2009 039 511 A1 ist ein Doppelkupplungsgetriebe beschrieben, das derart betreibbar ist, dass zumindest sieben Vorwärtsgänge ausführbar sind. Aus der FR 2 893 689 ist ein Doppelkupplungsgetriebe bekannt, bei dem eine Rückwärtsgangwelle vorgesehen ist, welche mit einer Vorgelegewelle zusammenwirkt. Weiterhin ist in der JP 11051125 ein Doppelkupplungsgetriebe beschrieben, das vier Vorwärtsgänge und einen Rückwärtsgang umfasst. Aus der EP 2 068 041 A1 ist ein Getriebe bekannt, das zwei koaxial angeordnete Eingangswellen aufweist und als ein Doppelkupplungsgetriebe mit einer kompakten Bauweise ausgeführt ist.

Die bisher bekannten Doppelkupplungsgetriebe sehen für die Realisierung des Rückwärtsgangs einen zusätzlichen Radsatz bzw. nur für den Rückwärtsgang ein eigenständiges Zahnrad vor, Dies erfordert einen zusätzlichen Bauraum beim Getriebe. Es gibt andere Getriebe, bei denen das Rangieren R-1 über die Kupplung erfolgt, indem die Antriebsräder für den ersten und R-Gang auf unterschiedlichen Antriebswellen - unterschiedlichen Teilgetrieben - sitzen. Beispiele sind die Getriebe Audi DL 501 aus dem Audi Q5 und Getrag DCT750 aus dem Mercedes-Benz SLS.

Doppelkupplungsgetriebe mit Loszahnrädern die für die Realisierung des Rückwärtsgangs an geeigneter Stelle einer Vorgelegewelle positioniert sind, sind in der DE 10 2008 024 633 A1 und der DE 10 2008 050 964 A1 beschrieben.

Aufgabe der vorliegenden Erfindung ist es, ein Getriebe der eingangs genannten Art so weiterzubilden, dass kein eigener Radsatz für den Rückwärtsgang benötigt wird, der einer der Vorgelegewellen zugeordnet ist.

Das erfindungsgemäße Getriebe umfasst eine Rückwärtsgangwelle mit einem Eingangszahnrad und einem Ausgangszahnrad, wobei das Eingangszahnrad der Rückwärtsgangwelle mit einem Antriebszahnrad der mindestens einen Eingangswelle kämmt und das Ausgangszahnrad der Rückwärtsgangwelle mit einem Abtriebszahnrad einer der Vorgelegewellen kämmt, sowie mit einer Schalteinrichtung zum Erzeugen einer Drehmoment übertragenden Verbindung von Eingangszahnrad und Ausgangszahnrad.

Das erfindungsgemäße Getriebe ist als Doppelkupplungsgetriebe ausgebildet.

Aufgrund des bei dem erfindungsgemäßen Getriebe ausgelagerten Rückwärtsgangs werden zur Darstellung des Rückwärtsgangs die Antriebszahnräder bzw. die Radsätze von zwei Vorwärtsgängen verwendet. Somit ist die Anordnung eines zusätzlichen Radsatzes für den Rückwärtsgang, der eine Vorgelegewelle zugeordnet ist, nicht notwendig. Es nimmt die zusätzlich vorgesehene Rückwärtsgangwelle das Eingangszahnrad und das Ausgangszahnrad auf. Das Eingangszahnrad der Rückwärtsgangwelle kämmt in einem Antriebszahnrad der mindestens einen Eingangswelle und das Ausgangszahnrad der Rückwärtsgangwelle kämmt mit einem

Abtriebszahnrad einer der Vorgelegewellen, Eines der Zahnräder der Rückwärtsgangwelle ist beispielsweise als Losrad ausgeführt und eine Einrichtung zum Schalten und Synchronisieren dieses Losrades ist vorgesehen. Beispielsweise Ist eine Rückwärtsgangwelle vorgesehen, mit der eine Verbindung zwischen dem Antriebsrad des vierten Gangs und dem Losrad des ersten Vorwärtsgangs hergestellt werden kann. Zur Darstellung des Rückwärtsgangs wird die Synchronisation des Losrades des ersten Gangs geschlossen, wobei gleichzeitig die mit dem vierten Gang verbundene Kupplung geschlossen wird. Demnach erfolgt der Gangwechsel zwischen dem Rückwärtsgang und dem ersten Gang beim Rangieren des Fahrzeugs ausschließlich über den Kupplungswechsel. Jeweils die Anund Abtriebsgänge sind unterschiedlichen Teilgetrieben wie auch unterschiedliche Vorgelegewellen zugeordnet. Andere Lösungen sind durchaus anwendbar, wie z, B. zwei Wellenhälften, die mit einem Schaltelement (Synchro-, Clownkupplung und dergleichen) kuppelbar sind, wie auch eine Auslegung mit beiden Zwischenrädern als Losräder auf einer stationären Welle.

Die erfindungsgemäße Gestaltung des Getriebes ermöglicht eine große Spreizung der Gänge, bietet ein großes Drehmomentpotenzial und es kann das Getriebe kompakt bauen.

Gemäß der Erfindung ist vorgesehen, dass das Getriebe als Doppelkupplungsgetriebe ausgebildet ist. Das erfindungsgemäße Doppelkupplungsgetriebe weist acht Vorwärtsgänge und einen Rückwärtsgang auf, Mit dem automatisierten Getriebe sind durchaus auch zehn oder zwölf Vorwärtsgänge und ein Rückwärtsgang darstellbar.

Das Doppelkupplungsgetriebe weist zwei Eingangswellen auf. Insbesondere kämmt das Eingangszahnrad mit einem Antriebszahnrad der einen

Eingangswelle und das Ausgangszahnrad mit einem Abtriebszahnrad, das mit einem Antriebszahnrad der anderen Eingangswelle kämmt.

Die erfindungsgemäße Gestaltung des Getriebes ermöglicht es, den Rückwärtsgang bei baulich einfacher Gestaltung des Getriebes auszulagern.

Vorzugsweise Ist eines der Zahnräder der Rückwärtsgangwelle, insbesondere das Eingangszahnrad, als Losrad ausgeführt und es dient die Schaltvorrichtung dem Schalten dieses Losrades.

Erfindungsgemäß ist vorgesehen, dass die In den Vorgelegewellen gelagerten Losräder unterschiedlichen Durchmesser aufweisen und die Losräder mit dem kleinsten Durchmesser, Insbesondere diejenigen für die höchsten Vorwärtsgänge, auf der jeweiligen Vorgelegewelle an deren Ende angeordnet sind. Hierdurch sind kleine Losräder darstellbar, mit der Konsequenz einer großen Spreizung und/oder einem kleinen Achsabstand.

Erfindungsgemäß ist vorgesehen, dass das Antriebszahnrad der jeweiligen Vorgelegewelle Im Bereich der Mitte der Vorgelegewelle angeordnet ist, insbesondere jeweils zwischen zwei Losrad-Synchrongruppen. Hierdurch ist nur eine geringe bis keine Drehmomentübertragung durch die Enden der Vorgelegewellen erforderlich. Demzufolge kann der Querschnitt der Vorgelegewellen klein gewählt werden, mit der Konsequenz kleiner Lager, kleiner Zahnräder, kleiner Achsabstände.

Als besonders vorteilhaft wird es angesehen, wenn ein Antriebszahnrad einer Eingangswelle mit zwei Abtriebszahnrädern, die unterschiedlichen Vorgelegewellen zugeordnet sind, kämmt. Dadurch lässt sich das Getriebe besonders kompakt ausbilden, bei guter Variabilität der Gänge, insbesondere der unteren Gänge oder des höchsten Ganges.

Weitere Merkmale der Erfindung ergeben sich aus den Unteransprüchen, der beigefügten Zeichnung und der Beschreibung der in der Zeichnung wiedergegebenen, bevorzugten Ausführungsbeispiele, ohne auf diese beschränkt zu sein.

Es zeigt in stark vereinfachter Darstellung zur Veranschaulichung der Grundprinzipien unterschiedlicher erfindungsgemäßer Getriebe:
- Fig. 1: eine Prinzipdarstellung eines Doppelkupplungsgetriebes mit acht Vorwärtsgängen,
- Fig. 2: die Prinzipdarstellung gemäß Fig. 1, mit veranschaulichtem Momentenfluss bei eingelegtem Rückwärtsgang,
- Fig. 3: für das in Fig. 1 und 2 veranschaulichte Getriebe, in Achsrichtung der Zahnräder gesehen, die Anordnung der im Momentenfluss des Rückwärtsgangs miteinander kämmenden Zahnräder,
- Fig. 4: bezüglich der grundsätzlichen Gestaltung des Getriebes nach Fig. 1, Varianten der Anordnung und/oder der Lage der Antriebszahnräder der Vorgelegewellen/des Abtriebszahnrades der Ausgangswelle des Getriebes,
- Fig. 5: eine Prinzipdarstellung des Doppelkupplungsgetriebes gemäß Fig. 1, das allerdings zehn Vorwärtsgänge aufweist,
- Fig. 6: für das in der Fig. 5 veranschaulichte Getriebe, in Achsrichtung der Zahnräder gesehen, die Anordnung der im Momentenfluss des Rückwärtsgangs miteinander kämmenden Zahnräder.

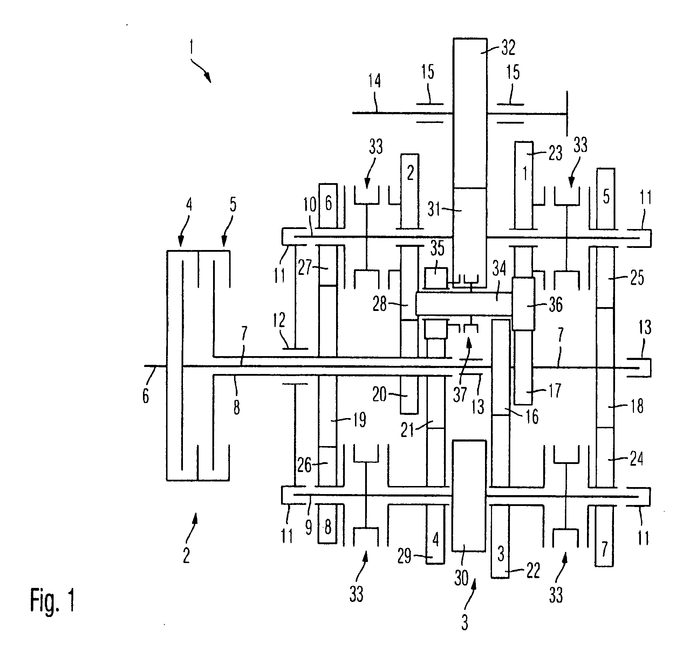

Das in Fig. 1 veranschaulichte erste Ausführungsbeispiel des erfindungsgemäßen Getriebes zeigt ein Doppelkupplungsgetriebe 1. Dies ist ein automatisiertes Schaltgetriebe, das mittels zweier Teilgetriebe einen vollautomatischen Gangwechsel ohne Zugkraftunterbrechung ermöglicht. Das Doppelkupplungsgetriebe 1 weist eine Doppelkupplung 2 und das eigentliche Getriebe 3 auf. Dieses besitzt acht Vorwärtsgänge, wobei der jeweilige Vorwärtsgang im Bereich des zugeordneten Zahnrades mit der entsprechenden Ziffer bezeichnet ist. Jedes Teilgetriebe weist eine Kupplung 4 bzw. 5 auf. Die Kupplung 4 verbindet den motorseitigen Abgang, veranschaulicht durch die Kurbelwelle 6 mit einer ersten Eingangswelle 7, die Kupplung 5 die Kurbelwelle 6 mit einer zweiten Eingangswelle 8. Die Eingangswelle 8 ist als Hohlwelle ausgebildet und wird von der ersten Eingangswelle 7 durchsetzt.

Parallel zu den beiden Eingangswelle 7 und 8 sind zwei Vorgelegewellen 9 und 10 angeordnet. Die Vorgelegewellen 9 und 10 sind im Bereich deren Enden in Lagern 11 gelagert. Die Eingangswelle 8 ist im Lager 12 und zusätzlich in der Eingangswelle 7 gelagert. Letztgenannte ist im Bereich des der Doppelkupplung 2 abgewandten Endes und in einem Mittenbereich in Lagern 13 gelagert. Parallel zu den beiden Vorgelegewellen 9 und 10 weist das Getriebe 3 ferner eine Ausgangswelle 14 auf, die in Lagern 15 gelagert ist und den Getriebeausgang darstellt.

Mit der Eingangswelle 7 sind drei Antriebszahnräder 16, 17 und 18 fest verbunden, wobei im konkreten Ausführungsbeispiel das der Doppelkupplung 2 zugewandte Antriebszahnrad 16 einen größeren Durchmesser hat als das diesem benachbarte Antriebszahnrad 17. Dieses ist auf der der Doppelkupplung 2 abgewandten Seite des Antriebszahnrades 16 angeordnet. Auf der der Doppelkupplung 2 abgewandten Seite des Antriebszahnrades 17 ist das Antriebszahnrad 18 angeordnet, das einen größeren Durchmesser aufweist als das Antriebszahnrad 16. Entsprechend sind mit der Eingangswelle 8 drei Antriebszahnräder 19, 20, 21 fest verbunden. Im konkreten Ausführungsbeispiel weist das der Doppelkupplung 2 benachbarte Antriebszahnrad 19 einen größeren Durchmesser auf als das Antriebszahnrad 20, das auf der der Doppelkupplung 2 abgewandten Seite des Antriebszahnrades 19 angeordnet ist. Auf der der Doppelkupplung 2 abgewandten Seite des Antriebszahnrads 20 ist das Antriebszahnrad 21 angeordnet, das einen Durchmesser aufweist, der größer ist als der des Antriebszahnrads 20, allerdings kleiner als derjenige des Antriebszahnrades 19.

Mit dem Antriebszahnrad 16 kämmt ein Abtriebszahnrad 22, das als Losrad ausgeführt ist und in der Vorgelegewelle 9 gelagert ist. Dieser Radpaarung ist der dritte Vorwärtsgang zugeordnet. Mit dem Antriebszahnrad 17 kämmt ein Abtriebszahnrad 23, das als Losrad ausgeführt ist und in der Vorgelegewelle 10 ist. Diesem Radpaar ist der erste Vorwärtsgang zugeordnet. Mit dem Antriebszahnrad 18 kämmen zwei Abtriebszahnräder 24 und 25. Das Abtriebszahnrad 24 ist als Losrad ausgeführt und in der Vorgelegewelle 9 gelagert. Die Radpaarung von Antriebszahnrad 18 und Abtriebszahnrad 24 ist dem siebten Vorwärtsgang zugeordnet. Das Abtriebszahnrad 25 ist als Losrad ausgeführt und in der Vorgelegewelle 10 gelagert. Das Radpaar von Antriebszahnrad 18 und Abtriebszahnrad 25 ist dem fünften Vorwärtsgang zugeordnet.

Das mit der Eingangswelle 8 verbundene Antriebszahnrad 19 kämmt gleichfalls mit zwei Abtriebszahnrädern, nämlich den Abtriebszahnrädern 26 und 27. Das Abtriebszahnrad 26 ist als Losrad ausgeführt und in der Vorgelegewelle 9 gelagert. Der Radpaarung von Antriebszahnrad 19 und Abtriebszahnrad 26 ist der achte Vorwärtsgang zugeordnet. Das Abtriebszahnrad 27 ist als Losrad ausgeführt und in der Vorgelegewelle 10 gelagert. Der Radpaarung von Antriebszahnrad 19 und Abtriebszahnrad 27 ist der sechste Vorwärtsgang zugeordnet. Das Antriebszahnrad 20 kämmt mit einem Abtriebszahnrad 28, das als Losrad ausgeführt ist und in der Vorgelegewelle 10 gelagert ist. Dieser Radpaarung ist der zweite Vorwärtsgang zugeordnet. Mit dem Antriebszahnrad 21 kämmt ein Abtriebszahnrad 29, das als Losrad ausgeführt ist und in der Vorgelegewelle 9 gelagert ist. Dieser Radpaarung ist der vierte Vorwärtsgang zugeordnet.

Die vorgenannten Abtriebszahnräder 22 bis 29 - Losräder - sind in bekannter Art und Weise mittels einer Einrichtung 33 zum Schalten und Synchronisierung des jeweiligen Losrades drehfest mit der zugeordneten Vorgelegewelle 9 bzw. 10 verbindbar, zwecks Drehmomentübertragung des jeweils gewählten Gangs.

Mit der Vorgelegewelle 9 ist drehfest ein Antriebszahnrad 30 verbunden, das auf etwa der halben Länge der Vorgelegewelle 9 positioniert ist, zwischen den Abtriebszahnrädern 22 und 29. Ferner ist mit der Vorgelegewelle 10 drehfest ein Antriebszahnrad 31 verbunden, das etwa auf halber Länge der Vorgelegewelle 10 positioniert ist, zwischen den Abtriebszahnrädern 23 und 28, wobei die Abtriebszahnräder 23 und 28 allerdings einen etwas größeren Abstand besitzen als die Abtriebszahnräder 22 und 29. Die beiden Antriebszahnräder 30 und 31 kämmen mit einem gemeinsamen Abtriebszahnrad 32, das drehfest mit der Ausgangswelle 14 verbunden ist.

Um bei dem insoweit beschriebenen Doppelkupplungsgetriebe 1 einen Rückwärtsgang zu realisieren, ist im Gehäuse des Getriebes eine Rückwärtsgangwelle 34 gelagert, die parallel zu den Vorgelegewellen 9 und 10 angeordnet ist. Im Bereich eines Endes weist die Rückwärtsgangwelle 34 ein Eingangszahnrad 35 und im Bereich des anderen Endes ein Ausgangszahnrad 36 auf. Das Eingangszahnrad 35 kämmt mit dem Antriebszahnrad 21, das mit der Eingangswelle 8 verbunden ist und es kämmt das Ausgangszahnrad 36 mit dem Abtriebszahnrad 23, das in der Vorgelegewelle 10 gelagert ist. Das in der Rückwärtsgangwelle 34 gelagerte Eingangszahnrad 35 ist als Losrad ausgeführt und mittels einer Schalt/Synchronisiereinrichtung 37 drehmomentübertragend mit der Rückwärtsgangwelle 34 verbindbar. Andere Lösungen, wie z. B. mit zwei Wellenhälften, die mit einem Schaltelement (Synchro-, Clownkupplung und dergleichen) koppelbar sind, sind denkbar, wie auch eine Auslegung mit beiden Zwischenrädern als Losräder auf einer stationären Welle.

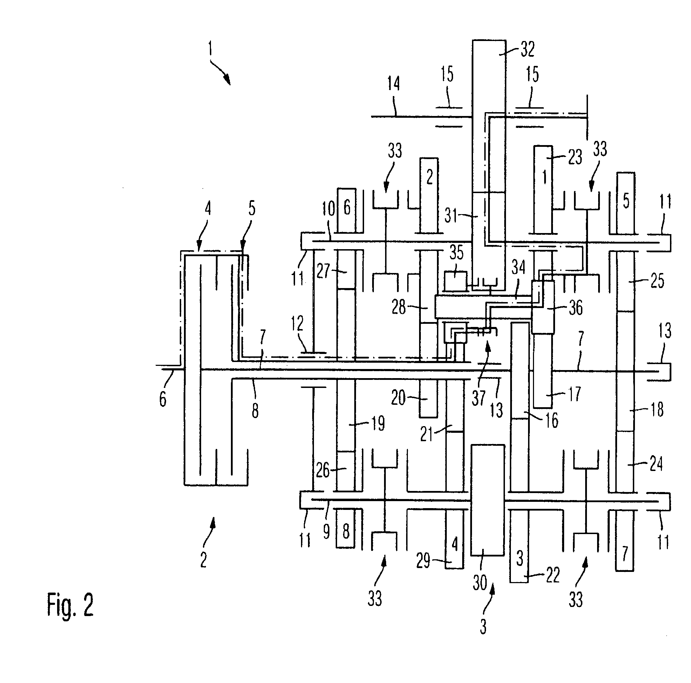

Das Grundprinzip des ausgelagerten Rückwärtsgangs ist anhand des veranschaulichten Momentenflusses gemäß Fig. 2 verdeutlicht;

Das Zahnrad 35 kämmt mit dem Antriebsgang eines Gangs, hier mit dem Antriebszahnrad 21, das mit dem Abtriebszahnrad 29 für den vierten Gang zusammenwirkt. Das Zahnrad 36 kämmt mit dem Abtriebszahnrad eines niedrigeren Ganges, hier mit dem Abtriebszahnrad 23 des ersten Gangs. Die An- und Abtriebsgänge sind unterschiedlichen Teilgetrieben wie auch unterschiedlichen Vorgelegen zugeordnet. Die Zahnräder 35 und 36 können über ein Schaltelement der Schalt/Synchronisiereinrichtung 37 miteinander gekoppelt werden. Zur Betätigung des Rückwärtsgangs werden diese Schaltung und auch die Synchronisation des Abtriebsgangs, hier des ersten Gangs geschlossen. Der Kraftfluss erfolgt demnach, wie zur Fig. 2 mit strichpunktierter Linie erläutert, von der Kurbelwelle 6 über die geschlossene Kupplung 5 zur Eingangswelle 8, von dort über das Antriebszahnrad 21 zum Eingangszahnrad 35, von dort über die Rückwärtsgangwelle 34 zum Ausgangszahnrad 36, von dort zum Abtriebszahnrad 23 und über die Vorgelegevirelle 10 zum Antriebszahnrad 31, von dort zum Abtriebszahnrad 32 und über die Ausgangswelle 14 aus dem Getriebe.

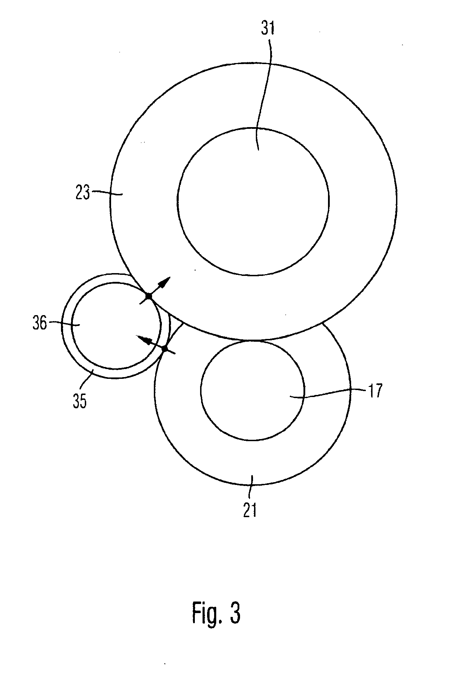

Fig. 3 veranschaulicht für das in Fig. 1 veranschaulichte Doppelkupplungsgetriebe 1, in Achsrichtung der Zahnräder gesehen, die Anordnung der miteinander kämmenden Zahnräder und zusätzlich, durch Pfeile verdeutlicht, den Momentenfluss.

Der besondere Konzeptvorteil eines derartig gestalteten Getriebes besteht darin, dass dann, wenn der erste Gang als Abtriebsgang gewählt wird, der Gangwechsel R-1 beim Rangieren ausschließlich über den Kupplungswechsel - Kupplung 4/Kupplung 5 - erfolgt.

Bei der beschriebenen Ausführungsform sind die acht Vorwärtsgänge über die beiden Vorgelegewellen 9 und 10 verteilt. Der Rückwärtsgang auf eigener Zwischenwelle - Rückwärtsgangwelle 34 - benutzt bestehende Zahnräder aus zwei Vorwärtsgängen. Die kleinsten Losräder (in der Regel die für die höchsten Gänge) auf der jeweiligen Vorgelegewelle sind am Ende der Vorgelegewelle positioniert. Dadurch sind sehr kleine Losräder möglich, mit der Folge großer Spreizung und/oder kleiner Achsabstände, dies gilt insbesondere unter dem Aspekt des nachstehend erörterten weiteren Vorzugsmerkmals. Gemäß diesem sind die Antriebszahnräder der Vorgelegewellen - Antriebszahnräder 30 und 31 - in der Mitte der Vorgelegewellen (jeweils zwischen zwei Losrad-Synchro-Gruppen) positioniert, daher erfolgt keine Drehmomentübertragung durch die Enden der Vorgelegewellen, womit der Querschnitt der Vorgelegewellen klein dimensioniert werden kann, ferner verbunden sind hiermit kleine Lager, kleine Zahnräder, kleine Achsabstände. Von Vorteil ist ferner, dass Gänge je Paar ein Antriebsrad teilen können, beispielsweise die Gänge 5 und 7 und/oder 8 und 6. Es ergibt sich hierdurch eine kompakte Gestaltung bei guter Variabilität unterer Gänge. Alternativ können die Gänge 4 und 6 und/oder 5 und 7 ein Antriebsrad teilen. Hierdurch ist der achte Gang variabel.

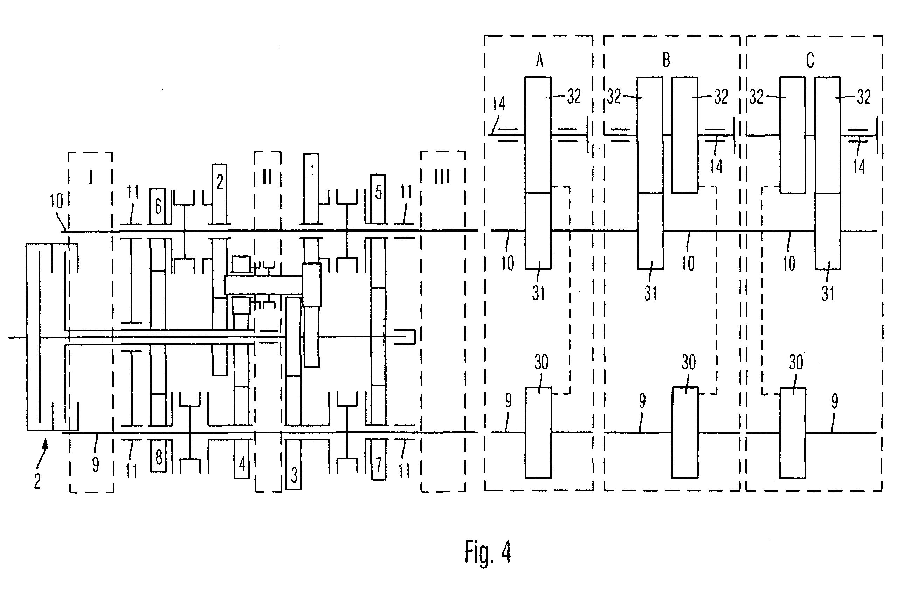

Fig. 4 zeigt bezüglich der grundsätzlichen Gestaltung des Getriebes nach Fig. 1 Varianten der Anordnung und/oder der Lage der Antriebszahnräder 30, 31 der Vorgelegewellen 9, 10 unter dem Aspekt eines oder zweier Abtriebszahnräder 32 der Ausgangswelle 14. Unter A ist eine Variante veranschaulicht, bei der die beiden Vorgelegewellen 9 und 10 zugeordneten Konstanten - Antriebszahnrad 30 und Antriebszahnrad 31- mit demselben Abtriebszahnrad 32, das mit der Ausgangswelle 14 verbunden ist, kämmen. Diese Variante findet bei der Ausführungsform gemäß Fig. 1 Verwendung. Unter B ist eine Variante veranschaulicht, bei der mit der Ausgangswelle 14 zwei Abtriebszahnräder 32 mit unterschiedlichem Durchmesser verbunden sind und mit dem einen Abtriebszahnrad 32 das eine Antriebszahnrad 30 und mit dem anderen Abtriebszahnrad 32 das andere Antriebszahnrad 31 kämmt. Hierbei ist das Antriebszahnrad 31 näher zur Doppelkupplung angeordnet als das Antriebszahnrad 30. Zu der Variante C ist eine grundsätzliche Anordnung gemäß Variante B veranschaulicht, allerdings mit dem Unterschied, dass das Antriebszahnrad 30 näher zur Doppelkupplung 2 angeordnet ist als das Antriebszahnrad 31.

Die Varianten A, B und C können jeweils an der Position I, II oder III gemäß Darstellung in Fig. 4 verwirklicht sein. Bei der nicht beanspruchten Variante I sind die Antriebszahnräder 30 und 31 sowie das bzw. die Abtriebszahnräder 32 unmittelbar benachbart der Doppelkupplung 2 im Bereich der Vorgelegewellen 9 und 10 angeordnet, wobei diese Vorgelegewellen über die der Doppelkupplung 2 benachbarten Lager 11 in Richtung der Doppelkupplung 2 verlängert sind. Die Anordnung gemäß Variante II entspricht der Positionierung gemäß dem Ausführungsbeispiel nach Fig. 1, wobei bei der Ausführungsform gemäß Fig. 1 konkret die Variante A Verwendung findet. Die nicht beanspruchte Variante III zeigt die Anordnung der Antriebszahnräder 30 und 31 sowie des bzw. der Abtriebszahnräder 32 im Bereich des der Doppelkupplung 2 abgewandten Endes der Vorgelegewellen 9 und 10, die in diesem Fall über die diesen benachbarten Lager 11 hinaus verlängert sind,

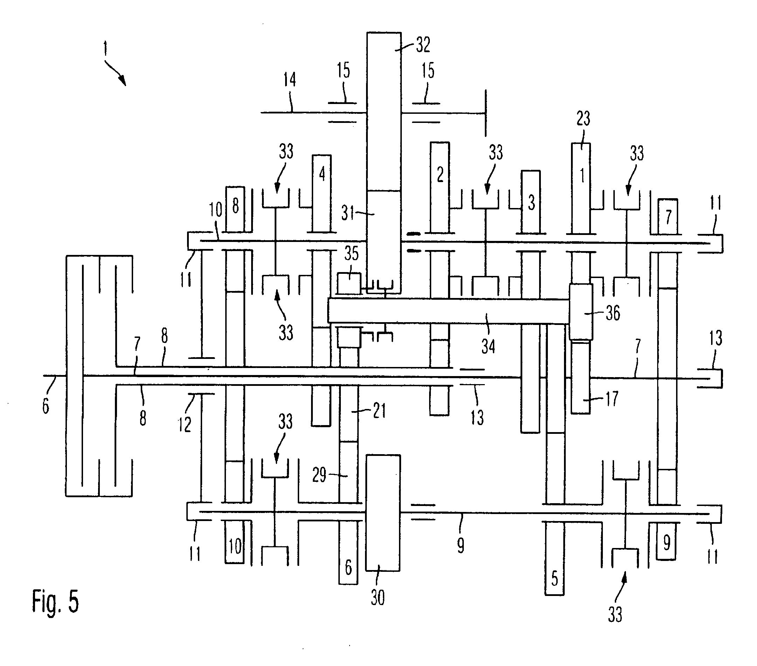

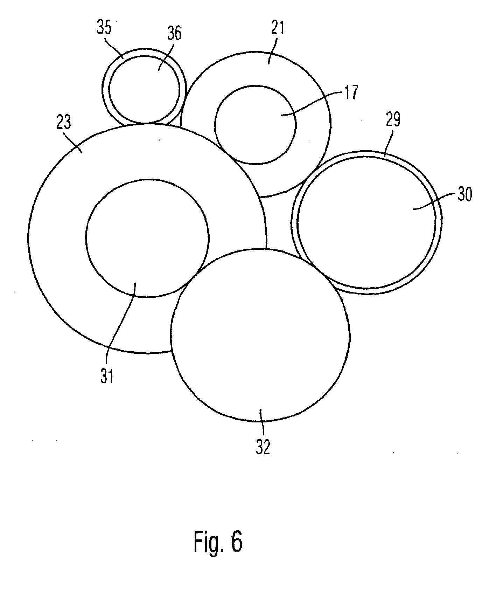

Die Fig. 5 und 6 zeigen für eine nicht beanspruchte Ausführungsform des Getriebes, das gleichfalls als Doppelkupplungsgetriebe 1 ausgebildet ist, allerdings mit zehn Vorwärtsgängen, eine Anordnung gemäß der Fig. 1 und 3. Die zehn Vorwärtsgänge sind mit den Ziffern 1 bis 10 bezeichnet, die unmittelbar im Bereich der Zahnräder dieser Gänge eingetragen sind. Bei den Zahnrädern handelt es sich, wie bereits zur Ausführung nach Fig. 1 beschrieben, um Losräder, die mittels Schalt/Synchronisiereinrichtungen 33 schaltbar sind, um den Kraftfluss zur zugehörigen Vorgelegewelle 9 bzw. 10 zu schließen bzw. aufzuheben. Der Einfachheit halber und um nicht eine Vielzahl zusätzlicher Bezugsziffern verwenden zu müssen, sind nur zu denjenigen Antriebszahnrädern der Eingangswellen 7 bzw. 8 sowie denjenigen Abtriebszahnrädern der Vorgelegewelle 9 bzw. 10, der Ausführungsform nach der Fig. 1 entsprechende Bezugsziffern eingetragen, die für das Verständnis dieser Ausführungsform mit zehn Vorwärtsgängen unter dem Aspekt des ausgelagerten Rückwärtsgangs erforderlich sind. Diese Bezugsziffern entsprechen bezüglich Anordnung und Funktion der bezifferten Bauteile denjenigen in Fig. 1, sodass zur Vermeidung von Wiederholungen auf die diesbezügliche Figurenbeschreibung Bezug genommen wird.

Bei der Ausführungsform nach den Fig. 5 und 6 sind der Vorgelegewelle 9 die Vorwärtsgänge 5, 6, 9 und 10 zugeordnet, der Vorgelegewelle 10 sind die Vorwärtsgänge 1 bis 4, 7 und 8 zugeordnet. Bei diesem Ausführungsbeispiel kämmt das Eingangszahnrad 35 mit dem Antriebszahnrad 21 für den sechsten Vorwärtsgang. Das Ausgangszahnrad 36 kämmt mit dem Abtriebszahnrad 23 und für den ersten Vorwärtsgang.

### Bezugszeichenliste

- 1: Doppelkupplungsgetriebe
- 2: Doppelkupplung
- 3: Getriebe
- 4: Kupplung
- 5: Kupplung
- 6: Kurbelwelle
- 7: Eingangswelle
- 8: Eingangswelle
- 9: Vorgelegewelle
- 10: Vorgelegewelle
- 11: Lager
- 12: Lager
- 13: Lager
- 14: Ausgangswelle
- 15: Lager
- 16: Antriebszahnrad
- 17: Antriebszahnrad
- 18: Antriebszahnrad
- 19: Antriebszahnrad
- 20: Antriebszahnrad
- 21: Antriebszahnrad
- 22: Abtriebszahnrad
- 23: Abtriebszahnrad
- 24: Abtriebszahnrad
- 25: Abtriebszahnrad
- 26: Antriebszahnrad
- 27: Abtriebszahnrad
- 28: Abtriebszahnrad
- 29: Abtriebszahnrad
- 30: Antriebszahnrad
- 31: Antriebszahnrad
- 32: Abtriebszahnrad
- 33: Schalt/Synchronisiereinrichtung
- 34: Rückwärtsgangwelle
- 35: Eingangszahnrad
- 36: Ausgangszahnrad
- 37: Schalt/Synchronisiereinrichtung

## Patentansprüche

1. Doppelkupplungsgetriebe (1), mit einer ersten und einer zweiten Eingangswelle (7, 8) jeweils mit Antriebszahnrädern (16, 17, 18, 19, 20, 21), mit zwei Vorgelegewellen (9, 10) Jeweils mit als Losräder ausgeführten Abtriebszahnrädern (22, 23, 24, 25, 26, 27, 28, 29) und jeweils mit einem Antriebszahnrad (30, 31), wobei die Antriebszahnräder (16, 17, 18, 19, 20, 21) der beiden Eingangswellen (7, 8) mit den Abtriebszahnrädern (22, 23, 24, 25, 26, 27, 28, 29) der Vorgelegewellen (9, 10) kämmen und die Antriebszahnräder (30, 31) der Vorgelegewellen (9, 10) mit mindestens einem Abtriebszahnrad (32) einer Ausgangswelle (14) kämmen, mit Einrichtungen (33) zum Schalten der Losräder, mit einer Rückwärtsgangwelle (34) mit einem Eingangszahnrad (35) und einem Ausgangszahnrad (36), wobei das Eingangszahnrad (35) der Rückwärtsgangwelle (34) mit einem Antriebszahnrad (21) einer (8) der Eingangswellen (7, 8) kämmt und das Ausgangszahnrad (36) der Rückwärtsgangwelle (34) mit einem Abtriebszahnrad (23) einer (10) der Vorgelegewellen (9, 10) kämmt, sowie mit einer Schalteinrichtung (37) zum Erzeugen einer Drehmoment übertragenden Verbindung von Eingangszahnrad (35) und Ausgangszahnrad (36),
**dadurch gekennzeichnet, dass**
das Doppelkupplungsgetriebe acht Vorwärtsgänge und einen Rückwärtsgang aufweist, und dass die in den beiden Vorgelegewellen (9, 10) gelagerten Abtriebszahnräder (22, 23, 24, 25, 26, 27, 28, 29) unterschiedliche Durchmesser aufweisen und die zwei Abtriebszahnräder (26, 27) mit den kleinsten Durchmessern für den höchsten Vorwärtsgang der jeweiligen Vorgelegewelle (9, 10), nämlich für die Vorwärtsgänge sechs und acht vorgesehen sind, und auf der jeweiligen Vorgelegewelle (9 bzw. 10) an deren Ende angeordnet sind, wobei das Antriebszahnrad (30 bzw. 31) der jeweiligen Vorgelegewelle (9 bzw. 10) Im Bereich der Mitte dieser Vorgelegewelle (9 bzw. 10) angeordnet ist.

2. Doppelkupplungsgetriebe nach Anspruch 1, **dadurch gekennzeichnet, dass** das Eingangszahnrad (35) mit dem Antriebszahnrad (21) der einen Eingangswelle (8) kämmt und das Ausgangszahnrad (36) mit dem Abtriebszahnrad (23) der Vorgelegewelle (10) kämmt, das mit einem Antriebszahnrad (17) der anderen Eingangswelle (7) kämmt.

3. Doppelkupplungsgetriebe nach einem der Ansprüche 1 bis 2, **dadurch gekennzeichnet, dass** eines der Zahnräder (35, 36) der Rückwärtsgangwelle (34), insbesondere das Eingangszahnrad (35) als Losrad ausgeführt ist und die Schalteinrichtung (37) dem Schalten dieses Losrades dient.

4. Doppelkupplungsgetriebe nach einem der Ansprüche 1 bis 2, **dadurch gekennzeichnet, dass** die Zahnräder der Rückwärtsgangwelle drehfest mit dieser verbunden sind und die Rückwärtsgangwelle zwei Wellenhälften aufweist, die miteinander koppelbar sind.

5. Doppelkupplungsgetriebe nach einem der Ansprüche 1 bis 2, **dadurch gekennzeichnet, dass** die Rückwärtsgangwelle stationär ist und zwei als Losräder ausgebildete Zahnräder aufnimmt, die mit der Rückwärtsgangwelle koppelbar sind.

6. Doppelkupplungsgetriebe nach einem der Ansprüche 1 bis 5, **dadurch gekennzeichnet, dass** ein Antriebszahnrad (19) einer Eingangswelle (8) mit zwei Abtriebszahnrädern (26, 27), die unterschiedlichen Vorgelegewellen (9 bzw. 10) zugeordnet sind, kämmt.

7. Doppelkupplungsgetriebe nach einem der Ansprüche 1 bis 5, **dadurch gekennzeichnet, dass** das Eingangszahnrad (35) mit dem Antriebszahnrad (21) der einen Eingangswelle (8) für einen höheren Gang, Insbesondere für den vierten oder sechsten Vorwärtsgang kämmt und das Ausgangszahnrad (36) mit dem Abtriebszahnrad (23) der einen Vorgelegewelle (10) für einen niedrigeren Gang, insbesondere für den ersten oder zweiten Vorwärtsgang kämmt.

## Claims

1. Dual-clutch transmission (1) having a first and a second input shaft (7, 8) each with driving gearwheels (16, 17, 18, 19, 20, 21), having two countershafts (9, 10) each with driven gearwheels (22, 23, 24, 25, 26, 27, 28, 29) in the form of loose gears and each with a driving gearwheel (30, 31), wherein the driving gearwheels (16, 17, 18, 19, 20, 21) of the two input shafts (7, 8) mesh with the driven gearwheels (22, 23, 24, 25, 26, 27, 28, 29) of the countershafts (9, 10) and the driving gearwheels (30, 31) of the countershafts (9, 10) mesh with at least one driven gearwheel (32) of an output shaft (14), having devices (33) for shifting the loose gears, having a reverse gear shaft (34) with an input gearwheel (35) and an output gearwheel (36), wherein the input gearwheel (35) of the reverse gear shaft (34) meshes with a driving gearwheel (21) of one (8) of the input shafts (7, 8) and the output gearwheel (36) of the reverse gear shaft (34) meshes with a driven gearwheel (23) of one (10) of the countershafts (9, 10), and having a shift device (37) for generating a torque-transmitting connection between input gearwheel (35) and output gearwheel (36),
**characterized in that**
the dual-clutch transmission has eight forward gears and one reverse gear, and **in that** the driven gearwheels (22, 23, 24, 25, 26, 27, 28, 29) that are mounted in the two countershafts (9, 10) have different diameters and the two driven gearwheels (26, 27) with the smallest diameters are provided for the highest forward gear of the respective countershaft (9, 10), specifically for the forward gears six and eight, and are arranged on the respective countershaft (9 or 10) at the end thereof, wherein the driving gearwheel (30 or 31) of the respective countershaft (9 or 10) is arranged in the region of the centre of said countershaft (9 or 10).

2. Dual-clutch transmission according to Claim 1, **characterized in that** the input gearwheel (35) meshes with the driving gearwheel (21) of one input shaft (8), and the output gearwheel (36) meshes with that driven gearwheel (23) of the countershaft (10) which meshes with a driving gearwheel (17) of the other input shaft (7).

3. Dual-clutch transmission according to either of Claims 1 and 2, **characterized in that** one of the gearwheels (35, 36) of the reverse gear shaft (34), in particular the input gearwheel (35), is in the form of a loose gear, and the shift device (37) serves for shifting said loose gear.

4. Dual-clutch transmission according to either of Claims 1 and 2, **characterized in that** the gearwheels of the reverse gear shaft are connected rotationally conjointly to said reverse gear shaft, and the reverse gear shaft has two shaft halves that can be coupled to one another.

5. Dual-clutch transmission according to either of Claims 1 and 2, **characterized in that** the reverse gear shaft is stationary and holds two gearwheels which are in the form of loose gears and which can be coupled to the reverse gear shaft.

6. Dual-clutch transmission according to one of Claims 1 to 5, **characterized in that** a driving gearwheel (19) of one input shaft (8) meshes with two driven gearwheels (26, 27) that are assigned to different countershafts (9 and 10 respectively).

7. Dual-clutch transmission according to one of Claims 1 to 5, **characterized in that** the input gearwheel (35) meshes with the driving gearwheel (21) of one input shaft (8) for a relatively high gear, in particular for the fourth or sixth forward gear, and the output gearwheel (36) meshes with the driven gearwheel (23) of one countershaft (10) for a relatively low gear, in particular for the first or second forward gear.

## Revendications

1. Boîte de vitesses à double embrayage (1), avec un premier et un deuxième arbre d'entrée (7, 8) respectivement avec les roues dentées d'entraînement en entrée (16, 17, 18, 19, 20, 21), avec deux arbres de transmission intermédiaire (9, 10) respectivement avec des roues dentées d'entraînement en sortie (22, 23, 24, 25, 26, 27, 28, 29) prenant la forme de roues libres et respectivement avec une roue dentée d'entraînement en entrée (30, 31), les roues dentées d'entraînement en entrée (16, 17, 18, 19, 20, 21) des deux arbres d'entrée (7, 8) s'engrenant avec les roues dentées d'entraînement en sortie (22, 23, 24, 25, 26, 27, 28, 29) des arbres de transmission intermédiaire (9, 10) et les roues dentées d'entraînement en entrée (30, 31) des arbres de transmission intermédiaire (9, 10) s'engrenant avec au moins une roue dentée d'entraînement en sortie (32) d'un arbre de sortie (14), avec des dispositifs (33) de connexion des roues libres, avec un arbre de marche arrière (34) doté d'une roue dentée d'entrée (35) et d'une roue dentée de sortie (36), la roue dentée d'entrée (35) de l'arbre de marche arrière (34) s'engrenant avec la roue dentée d'entraînement en entrée (21) d'un (8) des arbres d'entrée (7, 8) et la roue dentée de sortie (36) de l'arbre de marche arrière (34) s'engrenant avec la roue dentée d'entraînement en sortie (23) d'un (10) des arbres de transmission intermédiaire (9, 10), ainsi qu'avec un dispositif de connexion (37) permettant de réaliser une liaison de la roue dentée d'entrée (35) et de la roue dentée de sortie (36) transmettant le couple de rotation ;
**caractérisée en ce que** :
la boîte de vitesses à double embrayage comporte huit rapports de marche avant et un rapport de marche arrière et que les roues dentées d'entraînement en sortie (22, 23, 24, 25, 26, 27, 28, 29) disposées dans les deux arbres de transmission intermédiaire (9, 10) présentent des diamètres différents et que les deux roues dentées d'entraînement en sortie (26, 27) sont pourvues des plus petits diamètres pour le rapport de marche avant le plus élevé de l'arbre de transmission intermédiaire (9, 10) respectif, notamment pour les rapports de marche avant six et huit, et sont disposées sur l'arbre de transmission intermédiaire (9 et/ou 10) respectif, au niveau de l'extrémité, la roue dentée d'entraînement en entrée (30 et/ou 31) de l'arbre de transmission intermédiaire (9 et/ou 10) respectif étant disposée dans la zone du centre de cet arbre de transmission intermédiaire (9 et/ou 10).

2. Boîte de vitesses à double embrayage selon la revendication 1, **caractérisée en ce que** la roue dentée d'entrée (35) s'engrène avec la roue dentée d'entraînement en entrée (21) de l'arbre d'entrée (8) et que la roue dentée de sortie (36) s'engrène avec la roue dentée d'entraînement en sortie (23) de l'arbre de transmission intermédiaire (10) qui s'engrène avec une roue dentée d'entraînement en entrée (17) de l'autre arbre d'entrée (7).

3. Boîte de vitesses à double embrayage selon l'une quelconque des revendications 1 à 2, **caractérisée en ce qu'**une des roues dentées (35, 36) de l'arbre de marche arrière (34), notamment la roue dentée d'entrée (35), prend la forme d'une roue libre et que le dispositif de connexion (37) sert à connecter cette roue libre.

4. Boîte de vitesses à double embrayage selon l'une quelconque des revendications 1 à 2, **caractérisée en ce que** les roues dentées de l'arbre de marche arrière sont reliées à lui solidairement en rotation et que l'arbre de marche arrière comporte deux moitiés d'arbre pouvant être couplées entre elles.

5. Boîte de vitesses à double embrayage selon l'une quelconque des revendications 1 à 2, **caractérisée en ce que** l'arbre de marche arrière est stationnaire et reçoit deux roues dentées prenant la forme de roues libres pouvant être couplées à l'arbre de marche arrière.

6. Boîte de vitesses à double embrayage selon l'une quelconque des revendications 1 à 5, **caractérisée en ce qu'**une roue dentée d'entraînement en entrée (19) d'un arbre d'entrée (8) s'engrène avec deux roues dentées d'entraînement en sortie (26, 27) associées à différents arbres de transmission intermédiaire (9 et/ou 10).

7. Boîte de vitesses à double embrayage selon l'une quelconque des revendications 1 à 5, **caractérisée en ce que** la roue dentée d'entrée (35) s'engrène avec la roue dentée d'entraînement en entrée (21) de l'arbre d'entrée (8) pour un rapport supérieur, notamment pour le quatrième ou sixième rapport de marche avant et que la roue dentée de sortie (36) s'engrène avec la roue dentée d'entraînement en sortie (23) de l'un des arbres de transmission intermédiaire (10) pour un rapport inférieur, notamment pour le premier ou deuxième rapport de marche avant.
